# EUROPEAN PATENT APPLICATION

(11) **EP 1 126 464 A1**
(43) Date of publication of application: **22.08.2001**
(21) Application number: 00103048.5
(22) Date of filing: 15.02.2000
(51) Int. Cl.: G11B 33/04

(54) **Support for containers of compact discs**

(30) Priority: 15.02.1999 IT MI990084 U
(71) Applicant: Manufatti Plastici Traversa Ezio S.n.c., 22075 Lurate Caccivio (Como) (IT)
(72) Inventor: Traversa, Ezio, 22075 Lurate Caccivio (Como) (IT)
(74) Representative: Lecce, Giovanni

(57) **Abstract**

A support (10) for containers of compact discs, obtained from plastics or other suitable materials, applicable to the lids (12) of said containers provided on the opposite sides with apertures (14), characterized in that it comprises a hook-like upper extension (18), integral with a rectilinear extended central zone (16) provided, at its lower end, with a projection (26), slightly cantilevered in the direction of the external front along which said extension (18) develops, said extension having a cantilevered portion (30) which allows the snap or pressure fastening.

## Description

### DESCRIPTION

The present invention relates to a support for containers of compact discs.

More particularly, the present invention relates to a support applicable to containers of compact discs to allow the filing of the same in suspended position in drawers or cabinet spaces.

Systems for filing documents that involve the utilization of suspended grouping folders are known, especially in the field of office furniture; such folders are provided with a frame that develops along the major side of the two folded pages and that comprises hook-like protruding end projections. Through such projections, the folder is suspended along opposite and coupled supports, made up by bars that extend in drawers or housing spaces.

This arrangement of documents, selectively grouped in the book-like containers, simplifies the classification and ensuing consultation of what has been filed, as it allows users to file and have access in a direct and practical manner to the customary used material.

At present, as a consequence of the diffusion of the known apparatuses that allow to realize multi-media files and consultations, the documentation necessary to carry out the work activities is prevailingly compacted in optical supports, the so-called compact discs; such supports, that integrate a high amount of data to be consulted and needing a rapid updating, have replaced to a large extent the conventional filing systems referred to hereinabove, and involve in their turn the selective grouping of information. As a whole, this is therefore an updating of the traditional system of corporate or professional management, which allows to carry out the specific activities of the field, with the not be overlooked advantage of a concentration of the necessary knowledge.

According to this development, that involves the systematic consultation of the data contained in the optical supports or compact discs, the traditional document filing methods are, as said, more and more replaced; containers, classifiers or folders that group leaflets and papers in general are being progressively replaced by said supports, which provide not only the advantage of concentrating in a reduced space a big number or amount of information, but also that of allowing a rapid consultation.

In order to optimize work activity, it is however necessary that also the optical supports in question are easily positioned and caused to be accessible to users, to avoid useless time waste.

At present, the filing of the known compact discs puts only at disposal containers placed in superposed or adjoined position aligned in the drawers or housing spaces; this solution is not rational and often causes the random accumulation of the subjects and the various information stored in either of the supports. Therefore, the ensuing consultation causes drawbacks of a practical nature and brings about longer operating times.

Also some types of grouping units for compact discs are known that are constituted by cabinets or columns provided with many tailored seats for said supports; however, these types of solutions are not indicated for office rooms, because of their overall dimensions and the difficulty one generally has to place said cabinets within reach.

Object of this invention is to obviate the above drawback.

More particularly, object of this invention is to realize a support for containers of compact discs suitable to allow the rational filing of said containers, especially in office rooms.

A further object of the invention is to provide a support for containers of compacts discs such as not to require specific filing cabinets, with the associated size problems, but such as to allow its placing within the existing cabinets, for instance drawers of writing desks, and the like.

A further object of the invention is to provide a support as defined above, such as not to require changes or alterations of the containers of compact discs, capable of ensuring a high level of resistance and reliability in the time, and also such as to be easily and economically realizable.

These and still other objects are achieved by the support for containers of compact discs of the present invention, made from plastics or other suitable materials, applicable to the lids of said containers obtained on the opposite sides or apertures, that comprises a hook-like upper extension, integral with an extended rectilinear central zone, provided at the lower end with a projection, slightly cantilevered in the direction of the external front along which said extension develops, carrying a cantilevered portion with allows its snap or pressure fastening.

The constructive and functional characteristics of the support for containers of compact discs of the present invention will be better understood thanks to the following description, wherein reference is made to the attached drawings which represent a preferred non limiting embodiment, and wherein:
Figure 1 shows schematically the support of the present invention coupled to the lid of a container of compact discs, in a view from the internal front;
Figure 2 shows schematically a section along A-A line of Figure 1 of the lid of said container, to stress the housing seats of the support of the invention;
Figure 3 shows schematically, in front view, the lid of the container of compact discs provided with the support on both sides.

With reference to the above figures, the support for the container of compact discs, indicated as a whole by 10, is applied to lid 12 of said container, having a standard shape and traditionally provided with two or more apertures 14 along the opposite strips forming the sides.

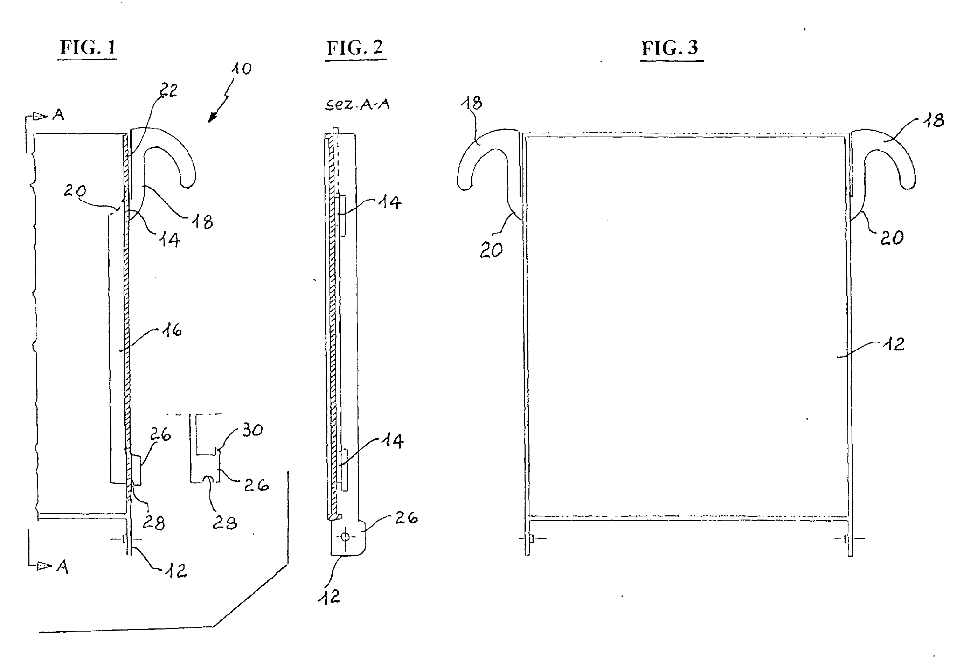

Said apertures 14 have a rectangular configuration, a size comprised between 8 and 12 mm in length and 2 and 4 mm in height, and are markedly spaced from one another along the sides of lid 12. Figures 1 and 2 show only two of these apertures 14, i.e. those formed near the upper part and the lower part of the sides of lid 12; in fact, it is through said opposite apertures that the support 10 of the present invention is applied to lid 12. Said support 10, advantageously but not critically obtained from plastics, is basically constituted by a mixtilinear strap, comprising an extended rectilinear central zone 16 which, in correspondence of the upper end, extends into an integral hook-like extension 18; said extension 18 is cantilevered with respect to the rectilinear central zone 16 to which it is connected by an arched bridging sector 20. The internal part 22 of the hook-like extension 18 has, in the zone above the arched sector 20, a rectilinear development parallel to the central zone 16, to align with and rest against the side of lid 12. Between the arched sector 20 and the internal part 22 having a rectilinear development of extension 18, an indent 24 is formed having an extension equal or slightly greater with respect to the thickness of the side of lid 12; indent 24 is slightly downwards inclined in the direction of the arched bridging sector 20. The lower end of support 10 has an integral protrusion 26, cantilevered towards the outside with respect to the central rectilinear zone 16, having a substantially rectangular form and a limited extension.

At the base of said projection a cavity 28 and/or a cantilevered portion is obtained. The width of support 10 in all the sectors or zones that make it up, is smaller than the length of apertures 14 present on each of the sides of lid 12, and its thickness is also smaller with respect to the height of said apertures; therefore, said support may be inserted starting from one of apertures 14 in lid 12, to couple with the respective side, as specified later on. Figure 3 shows schematically lid 12 provided, on both opposite sides, with a support 10, to form two coupled protruding hooks 18 through which said lid can be caused to hang during the filing from the conventional frames existing in the drawers or mobile units.

The coupling of supports 10 with the sides of lid 12 is realized in a rapid and simple manner. Each support, grasped starting from its upper end comprising the hook-like extension 18, is inserted in one of apertures 14, for instance aperture 14 formed in the upper part, to obtain the arrangement of Figure 3. Once the insertion has taken place, support 10 is rotated downwards, so as to align projection 26 with aperture 14 formed in the lower part; during the rotation, the arched bridging sector 20 positions so as to cause indent 24 to coincide with the side of lid 12 in the upper aperture 14.

The subsequent insertion by a slight hand pressure of projection 26 in aperture 14 formed in the lower part realizes the stabilization of support 10 along the respective side of lid 12, as cavity 28 obtained at the base of said projection 26 couples elastically with said side.

As can be understood from the above description, the advantages achieved by the invention are evident.

The support for containers of compact discs of the present invention is easily applicable to lids 12 of said container, which do not require structural modifications nor particular operations during the application.

If necessary, said supports may be easily removed, by restoring the original condition of the containers. The containers of compact discs provided with the supports of the invention are in the best filing condition, which may be advantageously carried out in the existing cabinets.

However, the invention, as has been described above and claimed hereafter, has been solely proposed by way of non critical example, being obvious that the same is susceptible of many modifications and variants, all of them falling anyhow within the scope of the novel concept.

## Claims

1. A support (10) for containers of compact discs, obtained from plastics or other suitable materials, applicable to lids (12) of said containers provided on the opposite sides with apertures (14), characterized in that it comprises a hook-like upper extension (18), integral with a rectilinear extended central zone (16) provided, at its lower end, with a projection (26), slightly cantilevered in the direction of the external front along which said extension (18) develops, said extension having a cantilevered portion (30) which allows the snap or pressure fastening.

2. The support according to claim 1, characterized in that is constituted by a mixtilinearly developed strap having a width and a thickness smaller with respect to the length and height of apertures (14) at least in the part forming said rectilinear zone (16) with a lower projection (26).

3. The support according to the preceding claims, characterized in that the hook-like upper extension (18) is cantilevered with respect to the rectilinear zone (16) to which it is connected by a bridging arched sector (20).

4. The support according to the preceding claims, characterized in that the internal part (22) of the hook-like extension (18) has, above the bridging arched sector (20), a rectilinear development parallel to said zone (16).

5. The support according to one or more of the preceding claims, characterized in that it has, between said arched sector (20) and the internal part (22) having a rectilinear development of the hook-like development (18), an indent (24) having an extension equal to or greater than the thickness of the side of lid (12), said indent being inclined downwards in the direction of said arched sector (20).

6. The support according to one or more of the preceding claims, characterized in that the base of projection (26) is provided with a cavity (28), said projection having a substantially rectangular configuration.

7. The support according to one of more of the preceding claims, characterized in that it is coupled to each of the sides of lid (12) in correspondence of at least two of the apertures (14) formed on same.
